# FASCICULE DE BREVET EUROPEEN

(11) **EP 1 496 292 B1**
(45) Date de publication et mention de la délivrance du brevet: **05.09.2007**
(21) Numéro de dépôt: 04014543.5
(22) Date de dépôt: 22.06.2004
(51) Int. Cl.: F16H 61/04, B60K 17/356, F16H 59/36

(54) **Procédé de changement de rapport pour chaîne de traction comportant un mécanisme de changement de rapport pour chaque roue motrice**
Verfahren zum Gangwechsel eines Antriebsstranges der für jedes Antriebsrad einen Schaltmechanismus besitzt
Method for shifting gears of a traction chain comprising a gear change mechanism for each driven wheel

(30) Priorité: 09.07.2003 FR 0308391; 21.07.2003 FR 0308890
(43) Date de publication de la demande: 12.01.2005
(73) Titulaire: Michelin Recherche et Technique S.A., 1763 Granges-Paccot (CH)
(72) Inventeur: Laurent, Daniel, 1723 Marly (CH); Varenne, Pierre, 1740 Neyruz (CH); Magne, Pierre-Alain, 1566 Saint Aubin (CH)
(74) Mandataire: Bauvir, Jacques

(56) Documents cités:
- US-A- 5 879 265
- US-A1- 2002 023 791
- US-A1- 2004 007 406

## Description

La présente invention concerne les véhicules automobiles à traction électrique ayant un moteur de traction par roue motrice. Elle trouve application aussi bien à des véhicules purement électriques qu' à des véhicules de type hybride série.

Dans certaines réalisations évoquées ci-dessus, il est jugé souhaitable de disposer d'un choix de rapports de démultiplication entre le moteur électrique et la roue. La chaîne de traction comporte donc un mécanisme de changement de rapport qui permet soit d'obtenir un couple important à la roue, soit d'atteindre la vitesse maximale du véhicule. Se pose alors le problème d'effectuer le changement de rapport d'une façon aussi imperceptible et douce que possible. On trouve différentes propositions dans les publications US 5,879,265, US 5,498,216, US 4,593,580, US 5,688,205, US 5,741,202, US 4,505,368 et US 2002/0023791 (divulguant toutes les caractéristiques du préambule de la revendication 1).

Cependant, tous ces dispositifs font appel à des moyens complexes et/ou coûteux pour assurer un changement de rapport aussi doux que possible.

L'objectif de l'invention est de pouvoir piloter le changement de rapport sur les roues motrices en utilisant autant que possible des moyens intégrés à d'autres fonctions afin d'éviter toute complexité inutile et source de panne.

L'invention propose un procédé de pilotage du changement de rapport pour un véhicule ayant au moins deux roues motrices chacune équipée d'une chaîne de traction comportant un moteur électrique entraînant un arbre d'entrée, un mécanisme de changement de rapport à deux rapports de démultiplication au moins avec position neutre entre rapports, dans lequel le changement de rapport sur les deux roues motrices est effectué en décalant dans le temps les changements de rapport sur les deux roues motrices selon la séquence suivante : dans une phase initiale,
- libération du rapport en cours sur une roue dite « manoeuvrée », et arrêt dans la position neutre,
- changement de la vitesse de rotation du moteur électrique pour la synchroniser en fonction de la démultiplication du rapport à engager sur la roue manoeuvrée, en utilisant comme estimation de la vitesse à atteindre une information vitesse obtenue d'une autre roue motrice, dite roue « capteur »,
- engagement du rapport visé sur ladite roue « manoeuvrée »,
puis dans une phase successive, changement de rapport sur ladite autre roue motrice.

De préférence, le changement de rapport sur ladite autre roue motrice est effectué d'une façon similaire en utilisant comme estimation de la vitesse à atteindre une information vitesse obtenue de la roue motrice sur laquelle on vient juste de changer le rapport de démultiplication. Cela revient donc à, d'une manoeuvre de changement de rapport sur une première roue motrice (phase initiale) à la manoeuvre de changement de rapport sur une deuxième roue motrice (phase successive), inverser les rôles de roue capteur et de roue manoeuvrée. Autrement dit, la localisation de la roue « capteur » et de la roue « manoeuvrée » est inversée entre la phase initiale et la phase successive.

Dans une mise en oeuvre particulière et non limitative décrite ci-dessous, l'invention utilise un mécanisme de changement de rapport intégré à la roue, le mécanisme comportant un crabot permettant de sélectionner l'un ou l'autre des rapports. En outre et de préférence, il est fait usage de moteurs électriques synchrones autopilotés sans balais qui, par nature, comportent un capteur de position du rotor. L'invention n'utilise que ce capteur de position du rotor du moteur et un ensemble capteur associé au mécanisme de changement de rapport pour déterminer la vitesse de rotation de la roue considérée et parvenir à tous les changements de rapports nécessaires. De préférence, l'arrangement ne comporte que deux rapports seulement.

L'invention est illustrée au moyen des figures jointes, dans lesquelles :
- La figure 1 montre une vue schématique d'une chaîne électrique de traction permettant la transmission d'un couple moteur à une roue motrice d'un véhicule.
- La figure 2 montre une vue schématique globale d'un véhicule à 4 roues motrices équipées chacune d'une chaîne électrique de traction similaire à celle représentée à la figure 1.
- Les figures 3 et 4 montrent deux phases de changement de rapport dans un cas particulier de l'invention pour un véhicule à 4 roues motrices.
- Les figures 5 et 6 montrent deux phases de changement de rapport dans un cas particulier de l'invention pour un véhicule à 2 roues motrices.
- la figure 7 montre un exemple détaillé d'une roue de véhicule dans laquelle est intégrée une chaîne électrique de traction, vue en coupe selon C/C indiqué à la figure 8 ;
- la figure 8 est une vue selon A à la figure 7 ;
- les figures 9A, 9B et 9C sont des perspectives partielles montrant la chaîne électromécanique de transmission ;
- les figures 10A, 10B et 10C sont des coupes selon 4/4 à la figure 8, montrant les organes essentiels du mécanisme de changement de rapport à deux rapports ;
- la figure 11 est une vue partielle de la chaîne électromécanique de transmission ;
- la figure 12 est un chronogramme montrant l'évolution au cours du temps pendant les changements de rapports de la position de la fourchette de commande, de la vitesse du moteur de traction et du couple du moteur de traction.

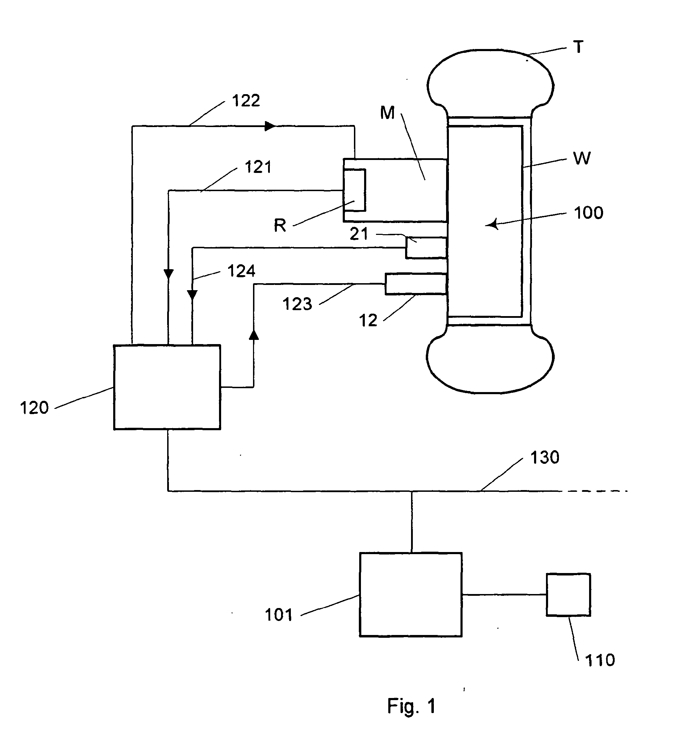

La figure 1 est une vue schématique d'une chaîne de traction électrique. On voit une roue W sur laquelle est monté un pneumatique T (ou une bande élastique non pneumatique ou tout autre organe approprié). Un mécanisme de changement de rapport 100 à deux rapports de démultiplication avec position neutre entre rapports est intégré à la roue W. Un exemple précis est donné ci-dessous, à titre non limitatif. On voit un moteur électrique M, qui est de préférence de type synchrone autopiloté, équipé d'un capteur de position rotor intégré (un resolver R par exemple). Un ensemble électronique 120 pilote la chaîne de traction associée à la roue W. L'ensemble électronique 120 est connecté au resolver R par une ligne 121. Le resolver R délivre une information de position du rotor de moteur qui permet de calculer la vitesse de rotation dudit moteur M par dérivation par rapport au temps. L'ensemble électronique 120 est connecté à une unité de calcul 101 par un bus CAN ® 130. L'ensemble électronique 120 est connecté à chacune des phases du moteur M par des lignes 122. L'extension en traits « pointillés » du bus CAN ® 130 signifie que l'unité de calcul 101 peut être reliée à un autre ensemble électronique 120 non représenté.

Le mécanisme de changement de rapport 100 comporte un actionneur 12 permettant d'effectuer le changement de rapport. L'actionneur 12 est relié à l'ensemble électronique 120 par la ligne 123. Le mécanisme de changement de rapport 100 comporte aussi un capteur de position 21 permettant d'identifier quelle e st la p osition d e l'actionneur 1 2 p armi t rois p ositions p ossibles : premier rapport correspondant à une « position démultipliée », point mort, deuxième rapport correspondant à une « prise directe ». L'ensemble électronique 120 est relié au capteur de position 21 par la ligne 124.

L'unité de calcul 101 envoie à l'ensemble électronique 120 des consignes de couple de traction et des ordres de changement de rapport, ce qui permet à l'ensemble électronique 120 d'injecter les courants appropriés dans les lignes 122 et de piloter le mécanisme de changement de rapport 100 comme on va l'expliquer plus en détails après avoir décrit les éléments d'architecture globale du véhicule nécessaires à la mise en oeuvre du procédé de changement de rapport proposé par l'invention.

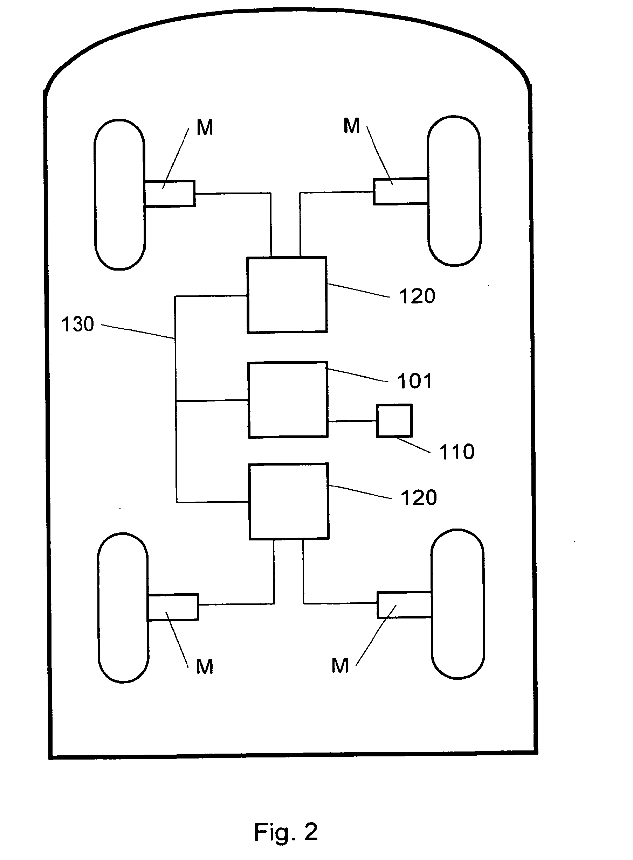

Le véhicule peut être à deux ou quatre roues motrices. On voit à la figure 2 une structure schématique de réalisation pour un véhicule à 4 roues motrices. Le contrôle global de la traction du véhicule est assuré par l'unité de calcul 101. On voit qu'il y a un ensemble électronique 120 pour chacun des deux essieux. Chaque ensemble électronique 120 pilote donc deux chaînes de traction électrique. Chaque chaîne de traction comporte un moteur M électrique de traction connecté à l'arbre d'entrée du mécanisme de changement de rapport 100 intégré à la roue W correspondante. En variante, il pourrait y avoir un ensemble électronique 120 associé à chacune des roues motrices.

L'unité de calcul 101 détermine notamment, selon un algorithme adapté, à la portée de l'homme du métier et étranger à l'objet de cette invention, le moment opportun pour effectuer le changement de rapport. L'unité de calcul 101 a à sa disposition un certain nombre d'informations provenant :
- de capteurs 110 donnant la position pédale d'accélérateur, la position de pédale de frein ou la force de freinage demandée, par exemple la pression dans le circuit de freinage, la position du volant, la position papillon des gaz du moteur thermique et le régime de ce moteur thermique (si le véhicule est de type hybride série équipé d'un moteur thermique),
- des ensembles électroniques de traction 120 associés aux roues motrices : vitesses des moteurs M, rapports actuellement engagés ; ces informations sont envoyées régulièrement (toutes les 10ms par exemple) par l'intermédiaire du bus CAN ® 130 (ou bien par l'intermédiaire d'un bus similaire) ; l'unité de calcul 101 peut alors, à partir de ces informations, calculer la vitesse de chacune des quatre roues.

Le changement de rapport proprement dit sur un essieu est piloté par l'ensemble électronique unique 120 assurant le contrôle des deux moteurs électriques de traction dudit essieu et le contrôle du mécanisme de changement de rapport sur les deux roues de l'essieu. Dans le cas de deux essieux moteurs, il y a donc deux ensembles électroniques 120 assurant le contrôle, chacun, des organes d'un essieu). Chaque ensemble électronique 120 reçoit un ordre de changement de rapport depuis l'unité de calcul 101 et lui envoie, après exécution, un compte-rendu.

Un objectif de l'invention est de toujours réaliser l'opération de changement de rapport en utilisant uniquement des capteurs utilisés par ailleurs pour le pilotage du couple de traction ; l'objectif est donc de ne pas rajouter de capteur de vitesse de la roue en aval du mécanisme de changement de rapport. Tant qu'un rapport est engagé, la vitesse de la roue est donnée par la combinaison de l'information vitesse du moteur de traction correspondant et l'information rapport engagé. Malheureusement, la vitesse de la roue reste utile dans la phase où le mécanisme de changement de rapport est au point mort (neutre). Pendant cette phase, on ne peut donc pas connaître la vitesse de la roue considérée.

Dans l'enchaînement des opérations pour changement de rapport, il est prévu, après le passage au neutre, de réajuster la vitesse de rotation du moteur de traction à un niveau compatible avec la vitesse de la roue lorsque la chaîne de traction utilisera le rapport que l'on envisage de sélectionner (synchronisation). Ceci implique donc la connaissance de cette vitesse de la roue même pendant la phase de changement de rapport.

Lorsqu'un rapport de vitesse est enclenché, l'utilisation combinée des capteurs suivants permet de connaître la vitesse à atteindre :
- le capteur de position intégré au moteur électrique synchrone autopiloté, dont on déduit la vitesse moteur par dérivation de la position par rapport au temps ,
- les capteurs de position équipant le dispositif de changement de rapport (boite de vitesse en prise directe ou en position démultipliée).

Dans le cas d'un véhicule à quatre roues toutes motrices, on peut décaler dans le temps les changements de rapports sur les deux essieux : d'abord changement de rapport sur un essieu puis changement de rapport sur l'autre essieu. Pendant le changement de rapport sur le premier essieu, la vitesse des roues concernées par un changement de rapport sera calculée par l'unité de calcul 101 à partir des informations vitesses moteurs de traction et rapport en cours sur l'autre essieu, la ou les roues dudit autre essieu jouant alors le rôle de roues dite « roues capteurs » RC. Les vitesses des roues concernées sont transmises depuis l'ensemble électronique 120 pilotant ledit autre essieu par le bus CAN ® 130 vers l'ensemble é lectronique 120 pilotant le premier essieu c omportant les r oues d ites « roues manoeuvrées » R M. Puis on reprend en changeant d'essieu pour les rôles de roues capteurs et roues manoeuvrées.

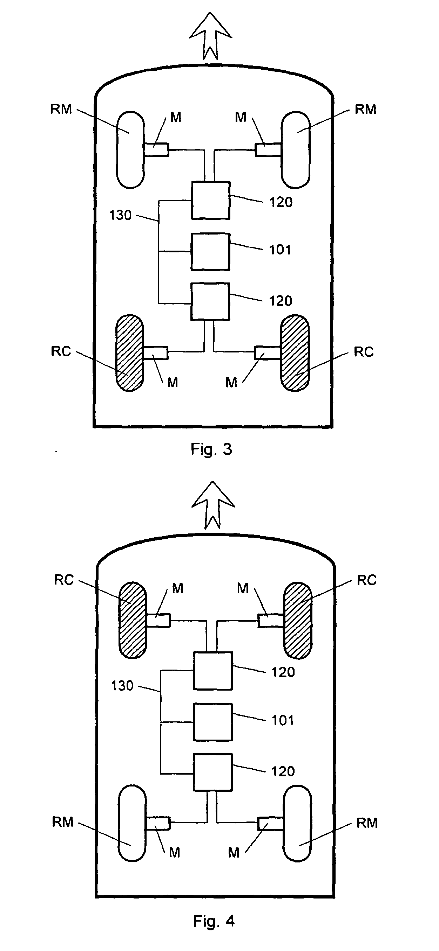

Les figures 3 et 4 illustrent schématiquement les deux phases successives décrites ci-dessus : tout d'abord par exemple le changement de rapport sur les roues avant, les roues avant étant les roues manoeuvrées RM, les roues arrière étant donc les roues capteurs RC (figure 3), puis le changement de rapport sur les roues arrière, les roues arrière étant dans cette dernière phase les roues manoeuvrées RM, les roues avant étant donc les roues capteurs RC (figure 4).

Il est primordial de se baser sur une information vitesse à atteindre fiable. Si, juste avant d e lancer l'ordre de changement de rapport ou pendant le changement de rapport, l'unité de calcul détecte u ne des deux roues capteurs RC dans une situation anormale (blocage ou patinage), l'information vitesse à atteindre sera élaborée à partir de l'autre roue RC du même essieu. Si les deux roues de l'essieu comportant les roues capteurs RC sont dans une situation anormale (blocage ou patinage) juste avant de lancer l'ordre de changement de rapport, l'ordre de changement de rapport ne sera pas envoyé jusqu'à retour à une situation normale. Si la situation anormale (blocage ou patinage) sur les deux roues de l'essieu comportant les roues capteur RC survient alors que la procédure de changement de rapport est en cours sur l'autre essieu, l'unité de calcul envoie comme information « vitesse à atteindre », la dernière information calculée jugée fiable. Une autre solution possible est la suivante : rester au neutre sur les roues RM en cours de changement de rapport jusqu'à ce que la vitesse donnée par la ou les roues capteur RC soit redevenue fiable.

Pour un véhicule à deux roues motrices, on peut décaler dans le temps les changements de rapports sur les deux roues : d'abord changement de rapport sur la roue gauche par exemple, puis changement de rapport sur la roue droite. Pendant le changement de rapport sur la roue gauche (roue manoeuvrée RM), la vitesse à atteindre sera calculée par l'ensemble électronique 120 à partir des informations vitesse moteur de traction et rapport en cours sur la roue droite (roue capteur RC ), et inversement.

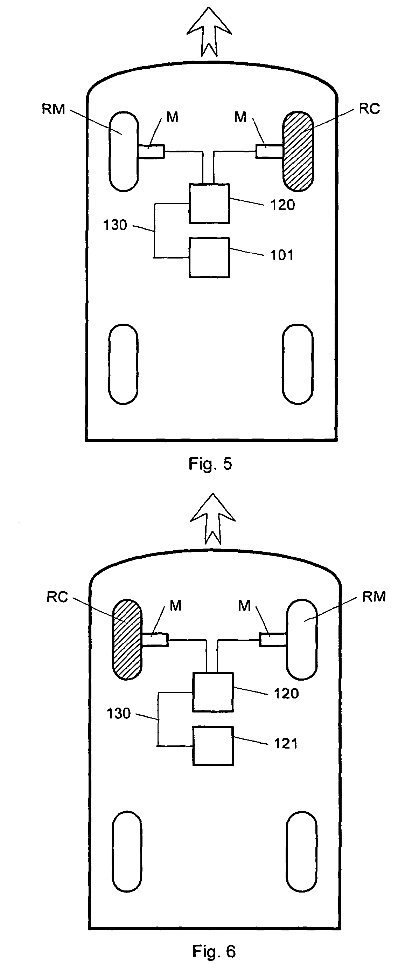

Les figures 5 et 6 illustrent schématiquement les 2 phases successives décrites ci-dessus dans le cas d'un véhicule où seules les roues avant sont motrices : tout d'abord par exemple le changement de rapport sur la roue avant gauche, la roue avant gauche étant la roue manoeuvrée RM, la roue avant droite étant donc la roue capteur RC (figure 5), puis le changement de rapport sur la roue avant droite, la roue avant droite étant la roue manoeuvrée RM, la roue avant gauche étant alors la roue capteur RC (figure 6).

D'une façon analogue à ce qui a été exposé ci-dessus, si juste avant de lancer l'ordre de changement de rapport, l'unité de calcul détecte la roue capteur RC dans une situation anormale (blocage ou patinage), l'ordre de changement de rapport ne sera pas envoyé jusqu'à retour à une situation normale. Si la situation anormale (blocage ou patinage) sur la roue capteur RC arrive alors que la procédure de changement de rapport est en cours sur l'autre roue RM, on utilise comme information vitesse à atteindre, la dernière information calculée fiable. Là encore, une autre solution possible est la suivante : rester au neutre sur la roue RM en cours de changement de rapport jusqu'à ce que la vitesse à atteindre donnée par la roue capteur RC soit redevenue fiable.

Dans tous les cas, si une roue se bloque (freinage très violent) pendant son propre changement de rapport et plus particulièrement quand la boite est au neutre, les vitesses moteur de traction et roue correspondante ne sont plus compatibles pour permettre d'enclencher le nouveau rapport. Cette situation n'est pas détectable car la roue est découplée mécaniquement du moteur. Pour éviter tout risque de rupture mécanique dans le dispositif, il est préférable d'interdire la procédure de changement de rapport en cas de freinage très violent, ce qui peut être détecté via la pression de freinage ou via une mesure d'accélération longitudinale ou via un signal approprié dans une électronique de contrôle global du véhicule.

La suite décrit plus en détails un exemple particulier de mécanisme de changement de rapport 100.

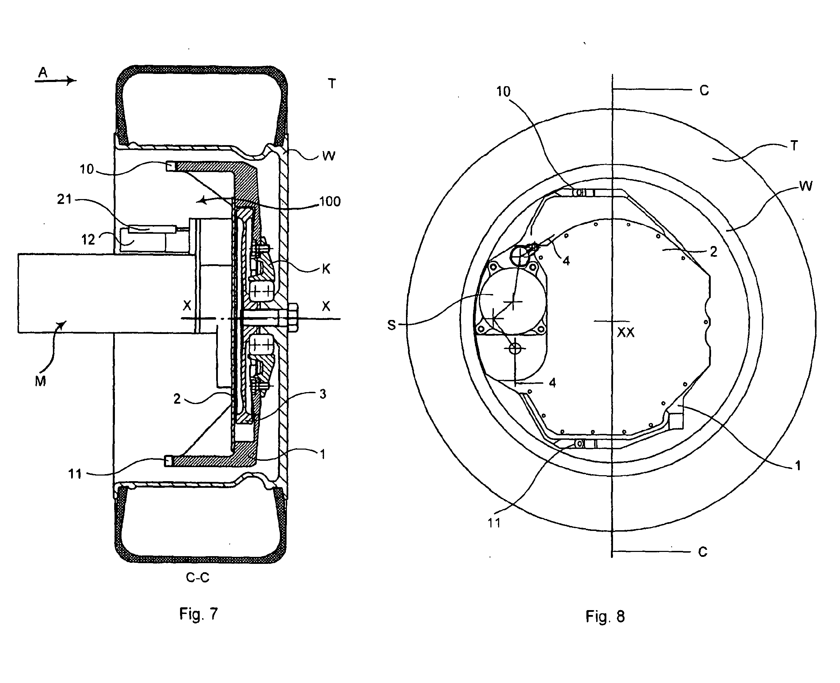

On reconnaît aux figures 7 et 8 la roue W sur laquelle est monté un pneumatique T. La roue est montée rotative sur un porte-roue K, l'axe XX étant son axe de rotation. La plupart des éléments du mécanisme de changement de rapport 100 sont contenus dans un carter 1 fermé par un couvercle 2 et par la partie statorique S d'un moteur électrique M de traction. Le carter 1 comporte un prolongement supérieur 10 et un prolongement inférieur 11 aux extrémités desquels peut être attaché un système de suspension de la roue W par rapport à un châssis ou à la caisse du véhicule. On ne montre ici que les organes dits non suspendus d'une liaison au sol pour véhicule automobile.

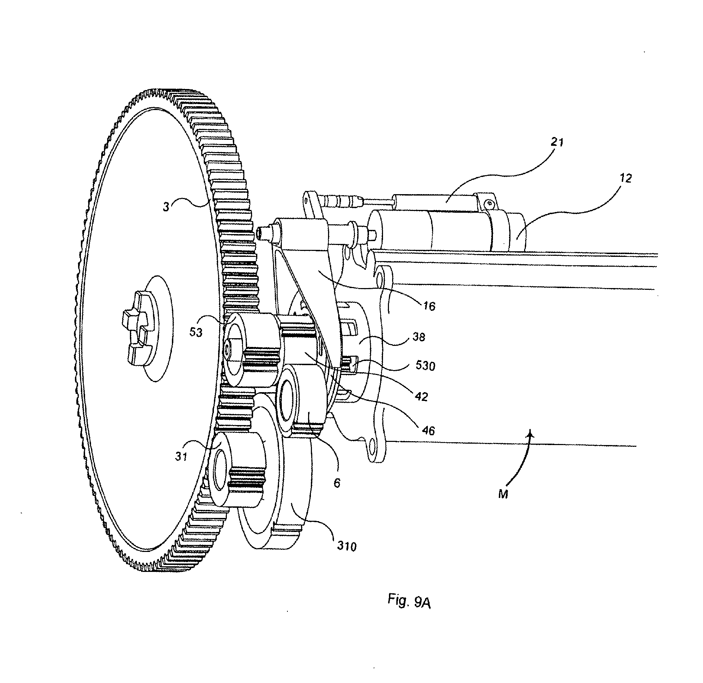

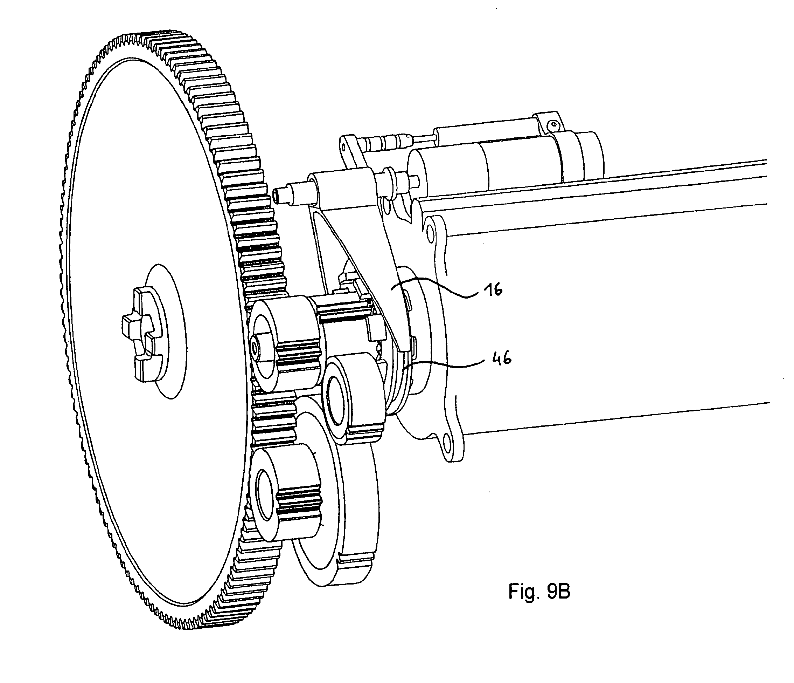

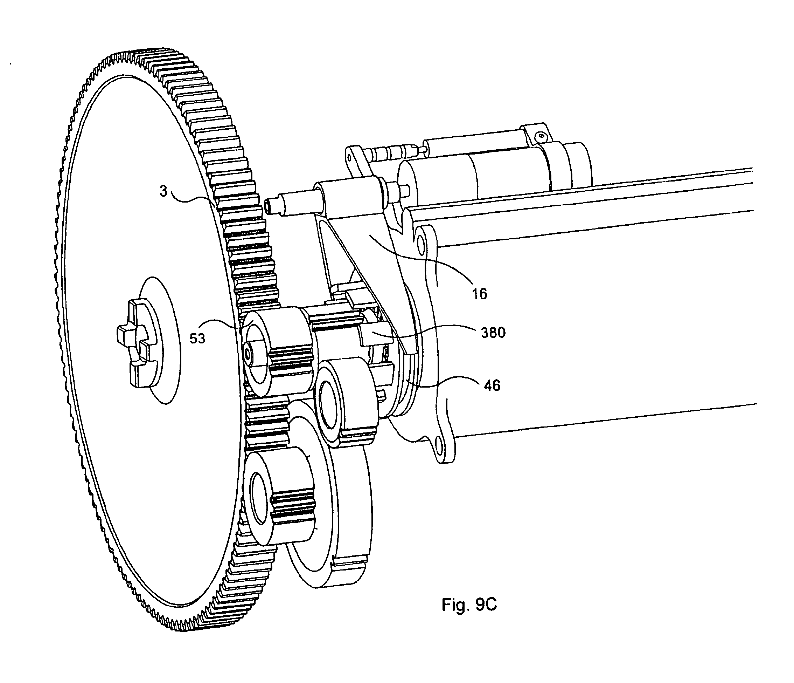

Le carter 1 délimite un espace clos avec le couvercle 2 et le moteur électrique M. Cet espace clos peut contenir la quantité d'huile nécessaire pour assurer la lubrification des organes mécaniques qui y sont installés. A l'intérieur du carter 1, on voit une roue dentée 3 (voir figure 7 et figures 9), rotative autour de l'axe XX, en prise directe avec la roue W.

A la figure 9A, on voit que la roue dentée 3 est engrenée avec un pignon de première 31. Le pignon de première 31 est coaxial et solidaire d'un pignon auxiliaire 310 de diamètre plus grand que le diamètre du pignon de première 31. Le pignon de première 31 et le pignon auxiliaire 310 forment une seule et même pièce mécanique monobloc rotative (voir figure 10A). Le pignon auxiliaire 310 est engrené sur un pignon intermédiaire 6. Le pignon 6 permet de maintenir le même sens de rotation du moteur électrique quel que soit le rapport engagé.

Par ailleurs, la roue dentée 3 est engrenée avec un pignon de seconde 53. Le pignon de seconde 53 est coaxial et solidaire d'un pignon crabotable 530 (voir notamment figure 9A et figure 10A). Le pignon de seconde 53 et le pignon crabotable 530 forment une pièce mécanique monobloc rotative. Cette pièce mécanique comporte un dégagement périphérique 532 dépourvu de denture, jouxtant le pignon crabotable 530 (voir notamment figure 10A). Cette pièce mécanique comporte également une portée intermédiaire lisse 531. Un pignon fou crabotable 42 est monté sur la portée intermédiaire lisse 531, coaxialement au pignon de seconde 53, de façon à pouvoir tourner librement par rapport au pignon de seconde 53.

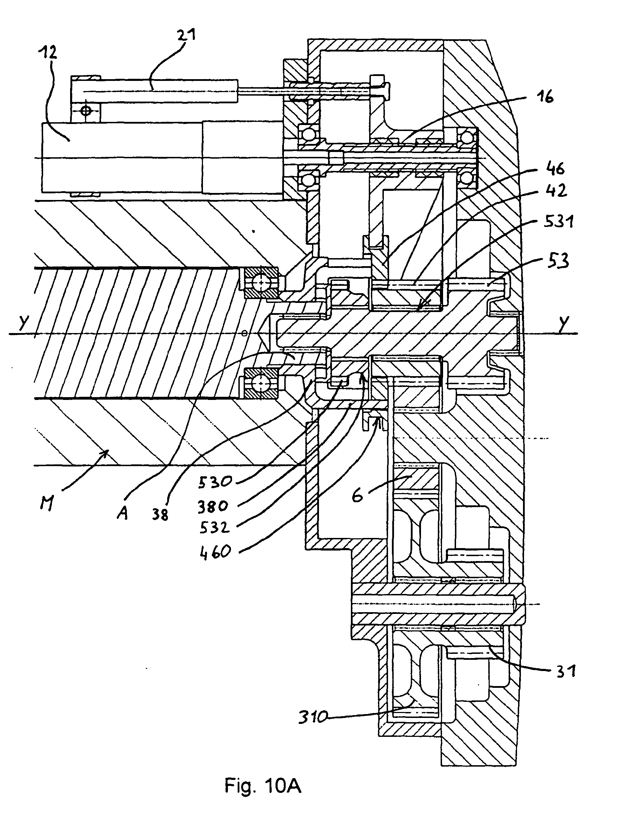

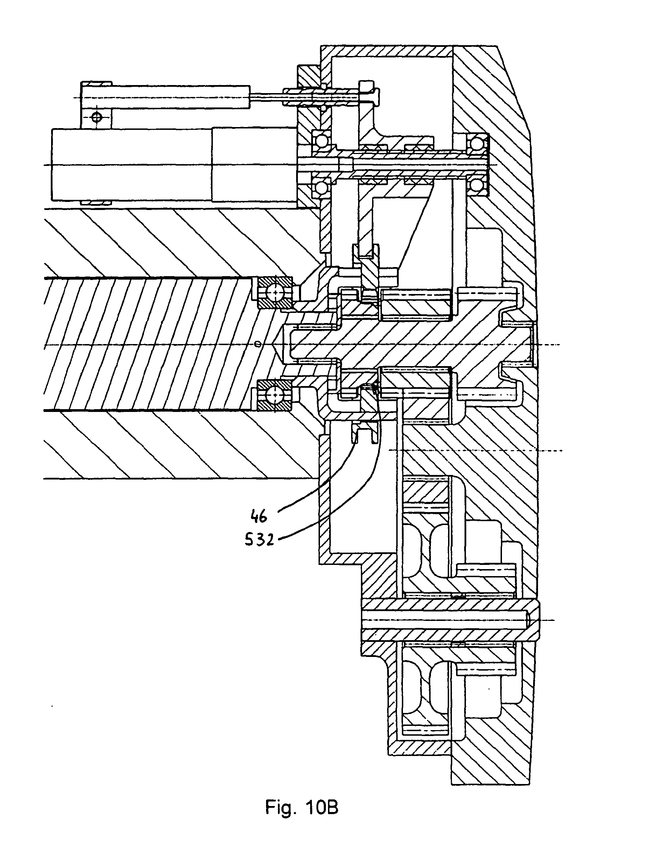

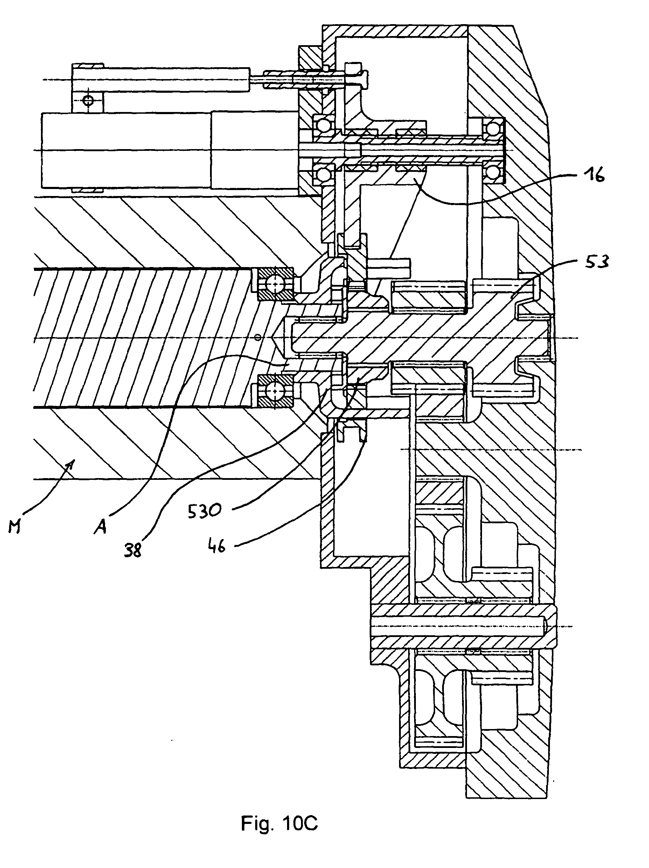

Le mécanisme de changement de rapport 100 comporte un crabot 46 permettant de sélectionner un rapport. Dans la réalisation illustrée, le crabot 46 comporte une denture intérieure identique à la denture (extérieure) du pignon crabotable 530 et du pignon fou crabotable 42. Le crabot 46 peut être craboté soit sur le pignon fou crabotable 42 pour disposer d'une démultiplication (figure 9A et 10A), soit sur le pignon crabotable 530 pour entraîner en prise directe (figure 9C et 10C), ou encore le crabot 46 peut être amené dans une position non crabotée dans laquelle sa denture intérieure est en regard du dégagement 532 libre de toute denture (figures 9B et 10B).

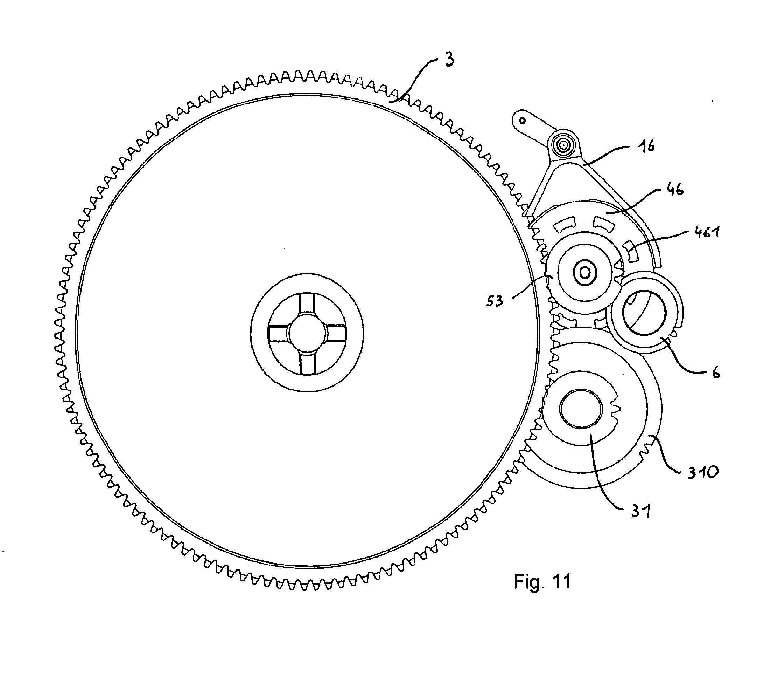

Par ailleurs, le crabot 46 comporte une gorge périphérique extérieure 460 (voir figure 10A) et des évidements 461 (voir figure 11). On voit un bout d'arbre A (figures 10) du rotor du moteur électrique M, l'axe YY étant l'axe de rotation de l'arbre A. Une cloche 38 est montée solidaire de l'arbre A du rotor du moteur électrique M. Le crabot 46 est centrée par la cloche 38. Une fourchette 16 est engagée radialement par l'extérieur dans la gorge périphérique 460 aménagée sur le crabot 46. La cloche 38 comporte des doigts 380 engagés dans les évidements 461 du crabot 46. Le crabot 46 peut glisser axialement par rapport à la cloche, tout en étant solidaire en rotation de celle-ci.

La fourchette 16 est commandée par un moto-réducteur 12. Un capteur de position 21 est relié à la fourchette 16. Le crabot 46 peut prendre trois positions :
- une position dans laquelle le crabot 46 entraîne la roue dentée via un pignon intermédiaire 6 permettant d'inverser la vitesse de rotation ; le crabot 46 est alors craboté avec le pignon fou 42, donc en prise avec le pignon de première 31, via les pignons intermédiaire 6 et auxiliaire 310 (voir notamment figures 9A et 10A) ;
- une position dans laquelle il est craboté avec le pignon auxiliaire 530, donc en prise avec le pignon de deuxième 53 (voir notamment figures 9C et 10C),
- une position intermédiaire neutre, visible aux figure 9B et 10B.

Le pignon de première 31 et le pignon de seconde 53 sont entraînés en permanence par la roue dentée 3. De denture identique, ils tournent tous les deux à la même vitesse angulaire. Le pignon de seconde 53, lorsqu'il est en prise avec l'arbre A du rotor du moteur électrique M via le second pignon auxiliaire 530, le crabot 46 et la cloche 38, est en prise directe avec le moteur M. En revanche, lorsque le couple de traction passe par le pignon de première 31, via la cloche 38, le crabot 4 6, le pignon fou 42, le pignon intermédiaire 6 et le pignon auxiliaire 310, il y a entre l'arbre A du rotor du moteur électrique M et le pignon de première 31 un rapport de démultiplication correspondant au rapport R entre le nombre de dents du pignon auxiliaire 310 et le nombre de dents du pignon fou 42.

Notons encore que le crabot entraîne la roue dentée 3 via un pignon intermédiaire 6 permettant d'inverser la vitesse de rotation. Ainsi le pignon 6 permet de maintenir le même sens de rotation du moteur électrique quel que soit le rapport engagé : prise directe ou autre rapport. En variante (non représentée aux figures), on pourrait très bien piloter le moteur électrique dans des sens de rotation opposés pour un rapport et pour l'autre rapport.

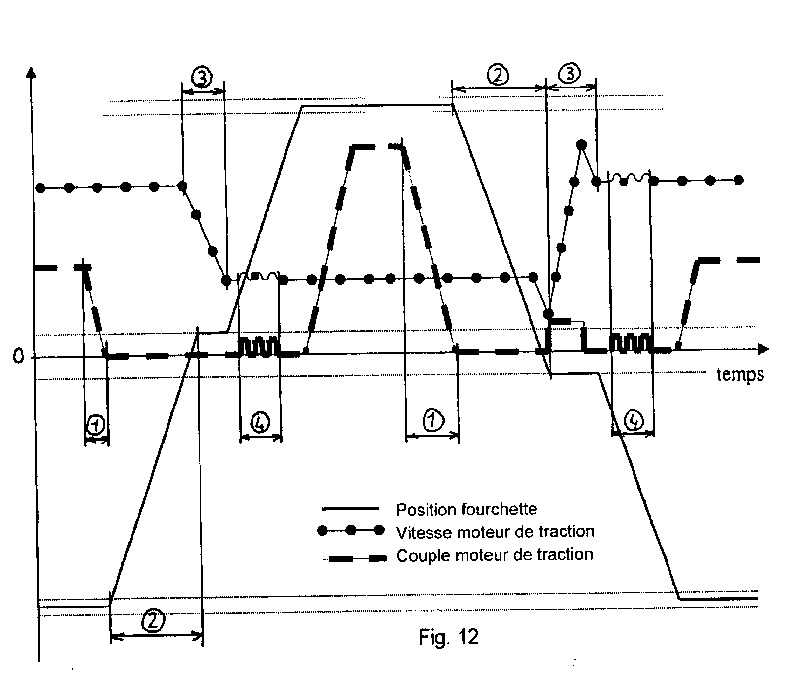

Le chronogramme donné à la figure 12 illustre l'enchaînement des opérations. Quel que soit le sens du changement de rapport, et quel que soit le passage de rapport concerné, un changement de rapport implique d'annuler le couple moteur (zone 1), de passer la boîte de vitesse en position neutre (zone 2), puis implique d'ajuster la vitesse de rotation du moteur au niveau correspondant au futur rapport sélectionné (zone 3), afin de pouvoir engager mécaniquement ledit rapport, avant de piloter à nouveau le moteur au couple voulu.

L'ensemble électronique 120 pilote les opérations suivantes, pour par exemple un passage du premier rapport vers le deuxième rapport :
- Contrôle premier rapport engagé sur roue manoeuvrée,
- Calcul vitesse de la roue à partir de « vitesse moteur traction » de la roue capteur et du rapport engagé sur la roue capteur,
- Couple moteur ramené à zéro,
- Passage au neutre,
- Réajustement vitesse moteur, sur la base de la vitesse de la roue calculée ci-dessus,
- Engagement deuxième rapport ,
- Contrôle deuxième rapport engagé,
- Rétablissement du couple moteur.

Au chronogramme de la figure 12, apparaissent aussi des détails préférentiels de réalisations, non limitatifs. Pour faciliter le passage de rapport, on peut provoquer, par un pilotage judicieux du couple du moteur électrique, de petites oscillations de vitesse (zone 4) dont le rôle est de favoriser la prise des crabots lors de l'engagement du rapport suivant. Notons que les variations de couple et les variations de vitesse en jeu sont très faibles : la variation de couple représentée en zone 4 ne sert qu'à accélérer le rotor du moteur M contre sa propre inertie ; la variation de vitesse qui en résulte est elle-même très faible, d'autant plus qu'elle est immédiatement limitée par le début de l'engagement du crabot (reprise des jeux fonctionnels). Il ne faut pas chercher à comparer les variations de couple et de vitesse représentées en zone 4 aux variations de couple et de vitesse représentées dans les autres zones, le dessin étant purement schématique.

De préférence et si les conditions de conduite le permettent, il convient de piloter le couple des moteurs électriques de traction de façon à ce que juste avant de dégager un rapport et juste après avoir engagé un autre rapport, le couple à la roue soit sensiblement équivalent. Si l'on va vers une plus grande démultiplication totale (passer de deuxième rapport en premier rapport), ceci impose de limiter volontairement le couple du moteur électrique juste après la manoeuvre de changement de vitesse. La diminution de couple se fait sensiblement dans le rapport R. Si l'on va vers une plus petite démultiplication totale (passer de premier rapport en deuxième rapport), ceci impose d'augmenter volontairement le couple électrique juste après la manoeuvre de changement de vitesse. L'augmentation de couple se fait sensiblement dans le rapport R. Or le couple disponible au moteur est forcément limité à une valeur Cmax. Si l'augmentation prévue de couple amenait à une valeur supérieure à Cmax, il convient, avant la manoeuvre de changement de vitesse, de diminuer le couple jusqu'à une valeur plus petite ou égale à Cmax/R, de telle sorte qu'après la manoeuvre de changement de vitesse, le couple appliqué ne dépasse pas la valeur Cmax.

Notons encore que, lors d'un passage de rapport vers un rapport de moindre démultiplication totale, le moteur électrique doit passer aussi rapidement que possible à une vitesse moindre dès que la boîte est en position neutre. Il faut donc freiner électriquement le moteur, ce qui implique d'être capable d'absorber de l'énergie électrique par ailleurs (par exemple dissipation dans des résistances ou recharge d'élément de stockage).

En résumé, l'invention propose un procédé de pilotage du changement de rapport pour un véhicule ayant au moins deux roues motrices chacune équipée d'une chaîne de traction semblable à ce qui a été décrit ci-dessus, dans lequel on décale dans le temps les changements de rapports sur les deux roues motrices : dans une phase initiale, changement de rapport sur une roue RM dite « manoeuvrée », la vitesse à atteindre étant calculée par l'ensemble électronique 120 à partir des informations vitesse moteur de traction et rapport en cours sur l'autre roue RC dite « roue capteur », puis dans une phase successive, changement de rapport sur ladite autre roue. Pour un véhicule ayant au moins quatre roues motrices dans deux essieux, au moins une roue c apteur RC e st s ituée s ur l'un d es e ssieux, les r oues manoeuvrées RM é tant s ur l'autre essieu pendant la phase initiale, et il y a inversion des localisations des roues « capteur » RC et « manoeuvrée » RM dans la phase successive.

Soulignons que l'application du procédé proposé par l'invention n'est nullement limité à un mécanisme de changement de rapport du type décrit ci-dessus. On pourrait l'utiliser aussi, par exemple, avec une boîte de vitesses à train épicycloïdal dans lequel un premier rapport est obtenu en freinant une bande frein, un deuxième rapport est obtenu en freinant une autre bande frein, et une position neutre est obtenue en ne freinant aucune des bandes freins évoquées ci-dessus, dont un exemple est donné par le brevet US 2,939,344.

## Revendications

1. Procédé de pilotage du changement de rapport pour un véhicule ayant au moins deux roues motrices chacune équipée d'une chaîne de traction comportant un moteur électrique M entraînant un arbre d'entrée, un mécanisme de changement de rapport à deux rapports de démultiplication au moins avec position neutre entre rapports, dans lequel le changement de rapport sur les deux roues motrices est effectué en décalant dans le temps les changements de rapport sur les deux roues motrices **caractérisé par** la séquence suivante : dans une phase initiale,
• libération du rapport en cours sur une roue dite « manoeuvrée » RM, et arrêt d ans la position neutre,
• changement de la vitesse de rotation du moteur pour la synchroniser en fonction de la démultiplication du rapport à engager sur la roue manoeuvrée RM, en utilisant comme estimation de la vitesse à atteindre une information vitesse obtenue d'une autre roue motrice, dite « roue capteur » RC,
• engagement du rapport visé sur ladite roue manoeuvrée » RM,
puis dans une phase successive, changement de rapport sur ladite autre roue motrice.

2. Procédé de pilotage du changement de rapport selon la revendication 1 dans lequel au cours de la phase successive, le changement de rapport sur ladite autre roue motrice est effectué d'une façon similaire au changement dans la phase initiale, avec inversion du rôle des roue « manoeuvrée » RM et roue « capteur » RC par rapport à ladite phase initiale.

3. Procédé de pilotage du changement de rapport selon la revendication 1, pour une chaîne de traction utilisant comme moteurs électriques de traction des moteurs synchrones autopilotés sans balais comportant un capteur de position du rotor intégré.

4. Procédé de pilotage du changement de rapport selon la revendication 3, dans lequel la vitesse à atteindre est calculée à partir de signaux relatifs à une roue motrice, un signal au moins provenant du capteur intégré au rotor et un autre signal au moins étant représentatif du rapport de démultiplication en cours sur ladite roue.

5. Procédé de pilotage du changement de rapport selon la revendication 1, pour un véhicule ayant au moins quatre roues motrices dans deux essieux, dans lequel au moins une roue capteur RC est située sur l'un des essieux, les roues manoeuvrées RM étant sur l'autre essieu pendant la phase initiale, et dans lequel les localisations des roues « capteurs » RC et « manoeuvrées » RM sont inversées dans la phase successive.

6. Procédé selon l'une des revendications 1 ou 5 dans lequel on interdit la procédure de changement de rapport en cas de freinage supérieur à un seuil prédéterminé.

7. Procédé selon la revendication 1 dans lequel on détecte, pendant la procédure de changement de rapport, le blocage ou le patinage sur la roue capteur RC et on utilise comme information « vitesse à atteindre » la dernière information calculée jugée fiable.

8. Procédé selon la revendication 1 dans lequel on détecte, pendant la procédure de changement de rapport, le blocage ou le patinage sur la roue capteur RC et on reste au neutre sur la roue manoeuvrée R M jusqu'à ce que la vitesse de la roue capteur RC soit redevenue fiable.

9. Procédé selon la revendication 5 utilisant deux roues capteurs RC dans un essieu, dans lequel on détecte, pendant la procédure de changement de rapport, le blocage ou le patinage d'une roue capteur RC et on calcule l'information vitesse à partir de l'autre roue capteur RC .

10. Procédé selon la revendication 5 utilisant deux roues capteurs RC dans un essieu, dans lequel on détecte pendant la procédure de changement de rapport le blocage ou le patinage des deux roues capteurs RC et on utilise comme information « vitesse à atteindre » la dernière information calculée jugée fiable.

11. Procédé selon la revendication 5 utilisant deux roues capteurs RC dans un essieu, dans lequel on détecte pendant la procédure de changement de rapport le blocage ou le patinage des deux roues capteurs RC et on reste au neutre sur les roues manoeuvrées jusqu'à ce que la vitesse d'au moins une roue RC de l'essieu capteur soit redevenue fiable.

## Claims

1. A method of controlling the gear change for a vehicle having at least two driving wheels, each equipped with a traction chain comprising an electric motor M which drives an input shaft, a gear change mechanism having at least two reduction gears with a neutral position between gears, in which the gear change on the two driving wheels is carried out by offsetting over time the gear changes on the two driving wheels **characterized by** the following sequence: in an initial phase,
• releasing the current gear on a wheel referred to as the "operated" wheel RM, and stopping it in the neutral position,
• changing the revolution speed of the motor so as to synchronize it as a function of the reduction of the gear to be engaged on the operated wheel RM, using as an estimate of the speed to be reached a speed information item that is obtained from another driving wheel, referred to as the "sensor" wheel RC,
• engaging the intended gear on said "operated" wheel RM,
then, in a successive phase, changing the gear on said other driving wheel.

2. The gear change control method as claimed in claim 1, in which during the successive phase the gear change on said other driving wheel is carried out in a manner similar to the change in the initial phase, with reversal of the role of "operated" wheel RM and "sensor" wheel RC compared to said initial phase.

3. The gear change control method as claimed in claim 1, for a traction chain using, as electric traction motors, brushless permanent magnet synchronous motors comprising an integrated rotor position sensor.

4. The gear change control method as claimed in claim 3, in which the speed to be reached is calculated on the basis of signals relating to a driving wheel, at least one signal coming from the integrated sensor on the rotor and at least one other signal being representative of the current reduction gear on said wheel.

5. The gear change control method as claimed in claim 1, for a vehicle having at least four driving wheels in two axles, in which at least one sensor wheel RC is located on one of the axles, the operated wheels RM being on the other axle during the initial phase, and in which the locations of the "sensor" RC and "operated" RM wheels are reversed in the successive phase.

6. The method as claimed in claim 1, in which the gear change procedure is prohibited in the event of braking above a predetermined threshold.

7. The method as claimed in claim 1, in which the blocking or slipping on the sensor wheel RC is detected during the gear change procedure, and the last calculated information item that is deemed reliable is used as the "speed to be reached" information item.

8. The method as claimed in claim 1, in which the blocking or slipping on the sensor wheel RC is detected during the gear change procedure, and on the operated wheel RM neutral is maintained until the speed of the sensor wheel RC has become reliable once again.

9. The method as claimed in claim 5 using two sensor wheels RC in one axle, in which the blocking or slipping of one sensor wheel RC is detected during the gear change procedure, and the speed information item is calculated on the basis of the other sensor wheel RC.

10. The method as claimed in claim 5 using two sensor wheels RC in one axle, in which the blocking or slipping of the two sensor wheels RC is detected during the gear change procedure, and the last calculated information item that is deemed reliable is used as the "speed to be reached" information item.

11. The method as claimed in claim 5 using two sensor wheels RC in one axle, in which the blocking or slipping of the two sensor wheels RC is detected during the gear change procedure, and on the operated wheels neutral is maintained until the speed of at least one wheel RC of the sensor axle has become reliable once again.

## Patentansprüche

1. Verfahren zur Steuerung des Gangwechsels bei einem Fahrzeug mit mindestens zwei Antriebsrädern, wobei die Antriebsräder jeweils mit einer Antriebskette ausgestattet sind, die einen eine Eingangswelle antreibenden Elektromotor M, einen Schaltmechanismus mit mindestens zwei Untersetzungsverhältnissen mit einer Neutralstellung zwischen den Übersetzungen aufweist, bei dem der Gangwechsel an den beiden Antriebsrädern **dadurch** erfolgt, dass der Gangwechsel an den beiden Antriebsrädern zeitverschoben ist, **gekennzeichnet durch** folgende Reihenfolge: in einer ersten Phase
• Freigabe des eingelegten Ganges an einem so genannten "geschalteten" Rad RM und Sperren in der Neutralstellung,
• Änderung der Drehzahl des Elektromotors zu deren Synchronisierung in Abhängigkeit der Untersetzung des Verhältnisses, mit dem das "geschaltete" Rad RM zu beaufschlagen ist, wobei hierzu als Schätzwert für die zu erreichende Drehzahl Geschwindigkeitsdaten verwendet werden, die von einem anderen, "Sensor"-Rad genannten Antriebsrad RC stammen,
• Einlegen des gewünschten Ganges an dem "geschalteten" Rad RM,
dann, in einer darauf folgenden Phase, Gangwechsel am anderen Antriebsrad.

2. Verfahren zur Steuerung des Gangwechsels nach Anspruch 1, wobei während der darauf folgenden Phase der Gangwechsel an dem anderen Antriebsrad ähnlich erfolgt wie bei dem Wechsel in der ersten Phase, wobei die Rollen des _{"}geschalteten" Rads RM und des _{"}Sensor"-Rads RC im Verhältnis zur ersten Phase vertauscht werden.

3. Verfahren zur Steuerung des Gangwechsels nach Anspruch 1 für eine Antriebskette, die als elektrische Antriebsmotoren selbstgesteuerte bürstenlose Synchronmotoren mit integriertem Positionssensor zur Erfassung der Lage des Rotors verwendet.

4. Verfahren zur Steuerung des Gangwechsels nach Anspruch 3, wobei die zu erzielende Geschwindigkeit aufgrund von Signalen bezüglich eines Antriebsrades berechnet wird, wobei mindestens ein von dem in dem Rotor integrierten Sensor stammendes Signal und mindestens ein anderes Signal für das an dem Rad anliegende Untersetzungsverhältnis charakteristisch sind.

5. Verfahren zur Steuerung des Gangwechsels nach Anspruch 1 bei einem Fahrzeug mit mindestens vier Antriebsrädern auf zwei Achsen, wobei während der ersten Phase mindestens ein Sensorrad RC sich auf einer der Achsen befindet und die geschalteten Räder RM sich auf der anderen Achse befinden und wobei die Lagen der "Sensor"-Räder RC und der "geschalteten" Räder RM in der darauf folgenden Phase vertauscht sind.

6. Verfahren nach einem der Ansprüche 1 bzw. 5, wobei der Vorgang des Gangwechsels bei einem Bremsvorgang, der einen vorgegebenen Schwellwert überschreitet, unterbunden wird.

7. Verfahren nach Anspruch 1, wobei während des Vorgangs des Gangwechsels das Blockieren bzw. Schleifen am Sensorrad RC erfasst wird und als Information "zu erzielende Geschwindigkeit" die zuletzt berechnete, als zuverlässig betrachtete Information verwendet wird.

8. Verfahren nach Anspruch 1, wobei während des Vorgangs des Gangwechsels das Blockieren bzw. Schleifen am Sensorrad RC erfasst wird und an dem geschalteten Rad RM die Neutralstellung so lange beibehalten wird, bis die Geschwindigkeit des Sensorrads RC wieder zuverlässig geworden ist.

9. Verfahren nach Anspruch 5, wobei auf einer Achse zwei Sensorräder RC verwendet werden, wobei während des Vorgangs des Gangwechsels das Blockieren bzw. Schleifen eines Sensorrads RC daran erfasst wird, und die Information Geschwindigkeit aufgrund des anderen Sensorrads RC berechnet wird.

10. Verfahren nach Anspruch 5, wobei auf einer Achse zwei Sensorräder RC verwendet werden, wobei während des Vorgangs des Gangwechsels das Blockieren bzw. Schleifen der beiden Sensorräder RC daran erfasst wird und als Information "zu erzielende Geschwindigkeit", die zuletzt berechnete, als zuverlässig betrachtete Information verwendet wird.

11. Verfahren nach Anspruch 5, wobei auf einer Achse zwei Sensorräder RC verwendet werden, wobei während des Vorgangs des Gangwechsels das Blockieren bzw. Schleifen der beiden Sensorräder RC daran erfasst wird und an den geschalteten Rädern die Neutralstellung so lange beibehalten wird, bis die Geschwindigkeit mindestens eines der Räder RC auf der Sensorachse wieder zuverlässig geworden ist.
